# EUROPEAN PATENT APPLICATION

(11) **EP 1 168 696 A2**
(43) Date of publication of application: **02.01.2002**
(21) Application number: 01114886.3
(22) Date of filing: 29.06.2001
(51) Int. Cl.: H04J 13/00, H04B 7/26

(54) **Mobile radio apparatus and control device thereof**

(30) Priority: 30.06.2000 JP 2000200237
(71) Applicant: KABUSHIKI KAISHA TOSHIBA, Kawasaki-shi, Kanagawa-ken 210-8572 (JP)
(72) Inventor: Nitta, Tatsuo, Intellectual Property Division, Minato-ku, Tokyo 105-8001 (JP)
(74) Representative: HOFFMANN - EITLE

(57) **Abstract**

A mobile radio apparatus selectively transmits one or some of candidates of a plurality of spread codes and selects one or more candidates of the transmitted spread codes among a databse of spread code and performs synchronization with the transmitted spread codes. The mobile radio apparatus comprises receiver configured to rearrange a group data of spread code based on frequency of the spread code and generate a database of spread codes based on the rearranged group data.

## Description

The present invention relates to a mobile radio apparatus and its control device.

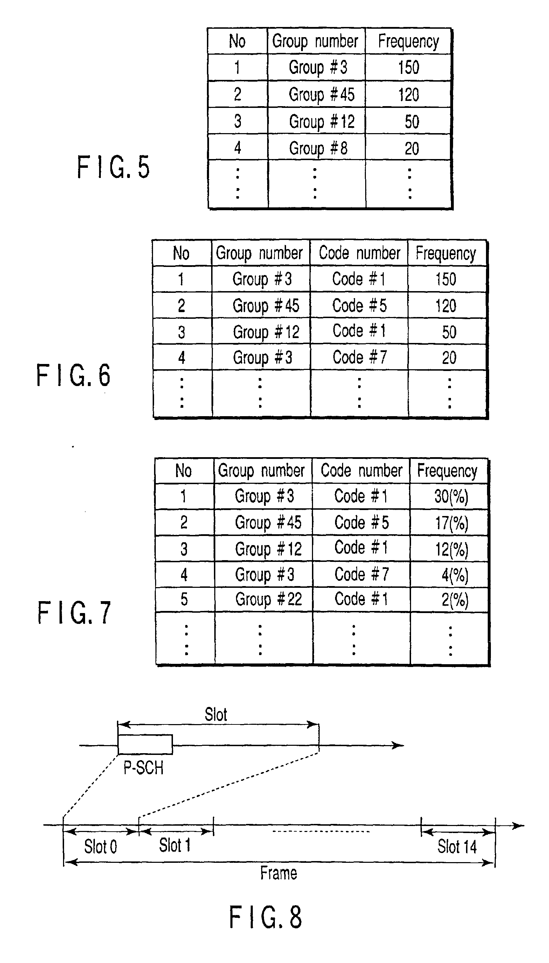

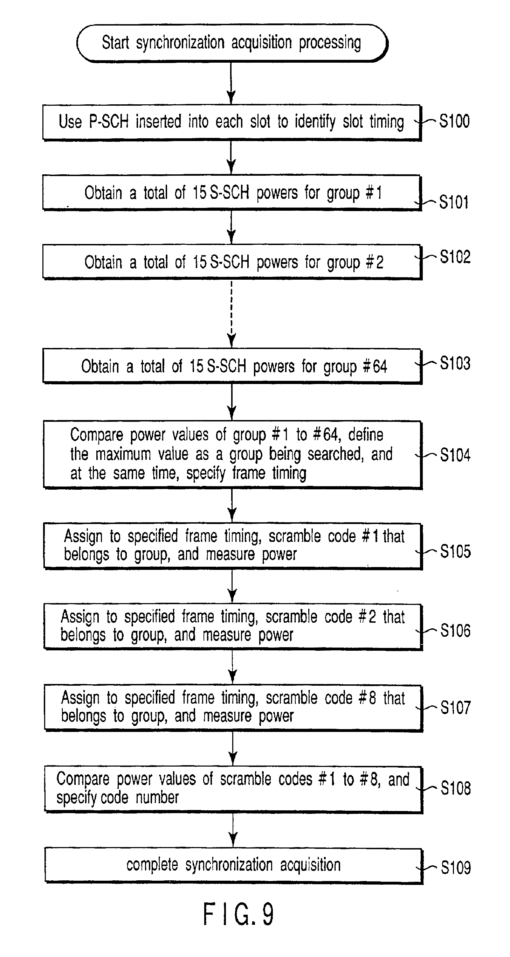

FIG. 8 is a view showing a frame format in a conventional W-CDMA system. FIG. 9 is a view showing a flow of synchronization acquisition processing defined in accordance with a conventional standard specification, for example.

In the W-CDMA system, as shown in FIG. 8, one frame consists of 10 ms, wherein its contents are divided into 15 slots (slot numbers #0 to #14).

Synchronization acquisition processing first detects a primary search code (hereinafter, referred to as P-SCH) inserted into each slot by a matched filter, and identifies a slot timing (step S100). Next, as in the P-SCH, a pattern of a secondary search code (S-SCH) inserted into each slot is checked, and a group of codes to be searched and a frame timing are identified. Here, in the S-SCH, a pattern for each frame is acquired for each slot in order to indicate patterns 1 to 17, and is collated with a table held by a receiver, whereby the group and frame head can be detected.

For example, in the case where an S-SCH pattern for each slot has been detected as 5, 16, 7, 3, 14, 16, 3, 10, 5, 12, 14, 12, 10, 1, and 1 relevant to a temporarily set frame, a list of these numbers corresponds to group 2, and thus, the group numbers can be specified. Sequentially, the essential patterns of group 2 are 1, 1, 5, 16, 7, 3, 14, 16, 3, 10, 5, 12, 14, 12, and 10 sequentially in order from the frame head of a system so that the 14th slot of the detected patterns can be specified as the head of the essential system frame. If these patterns are judged by hardware, there is a high possibility that a search fails due to a bit error or the like. Thus, in general, receiving power is measured for all the patterns by way of hardware judgment, and a group is specified by comparing them with each other. In this system, there are 64 groups, thus making it necessary to search all the 64 patterns if these patterns are searched as they are.

That is, as shown in the steps S101 to S103, a total of 15 S-SCH powers is obtained for each of groups #1 to #64. Then, at the step S104, the power values of groups #1 to #64 are compared with each other, a maximum value is defined as a currently searched group, and at the same time, a frame timing is also specified.

When the timing and group of the frame head have been specified, all scramble codes (here, defined as #1 to #8) that belong to this group are demodulated in accordance with a specified frame timing, and power is judged (steps S105 to S107). Then, the power values of the scramble codes #1 to #8 are compared with each other, whereby it is specified as to which of the scramble codes are used for transmission at a transmission side (step S108).

When the above processing has been completed, the system synchronization acquisition completes (step S109), which enables communication.

However, in the above described conventional method, in the case of performing synchronization acquisition processing immediately after power has been turned ON or after out-of-synchronization has been established, it is required to perform identical processing 64 times in order to identify a group. In addition, in order to identify a scramble code after the group has been identified as well, all the codes that belong to the group are used to cause operation, and these codes are compared with each other, thereby making it necessary to determine a code.

Therefore, there is a problem that an amount of synchronization acquisition processing increases, much processing time is required, and current consumption increases.

The present invention has been made in view of the foregoing problem. It is an object of the present invention to provide a mobile radio apparatus and its control device capable of reducing an amount of synchronization acquisition processing and reducing a processing time and current consumption.

To attain the aforementioned object, a mobile radio apparatus according to a first aspect of the present invention, which selectively transmits one or some of candidates of a plurality of spread codes and selects one or more candidates of the transmitted spread codes among a databse of spread code and performs synchronization with the transmitted spread codes, the mobile radio apparatus comprising: receiver configured to rearrange a group data of spread code based on frequency of the spread code and generate a database of spread codes based on the rearranged group data.

To attain the aforementioned object, a control device of a mobile radio apparatus according to a second aspect of the present invention, which selectively transmits one or some of candidates of a plurality of spread codes and selects one or more candidates of the transmitted spread codes among a database of spread code and performs synchronization with the transmitted spread codes, the control device comprising; control section configured to rearrange a group data of spread code based on frequency of the spread code and generate a database of spread codes based on the rearranged group data.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a view showing a configuration of a mobile radio apparatus to which the present invention is applied;
FIG. 2 is a flow chart illustrating the details of synchronization acquisition processing according to a first embodiment of the present invention;
FIG. 3 is a flow chart illustrating the details of synchronization acquisition processing according to a second embodiment of the present invention;
FIG. 4 is a flow chart illustrating the details of synchronization acquisition processing according to a third embodiment of the present invention;
FIG. 5 is a view showing a database table configured in the first embodiment of the present invention;
FIG. 6 is a view showing a database table configured in the second embodiment of the present invention;
FIG. 7 is a view showing a database table configured in the third embodiment of the present invention;
FIG. 8 is a view showing a frame format in a conventional W-CDMA system; and
FIG. 9 is a view showing a flow of conventional synchronization acquisition processing.

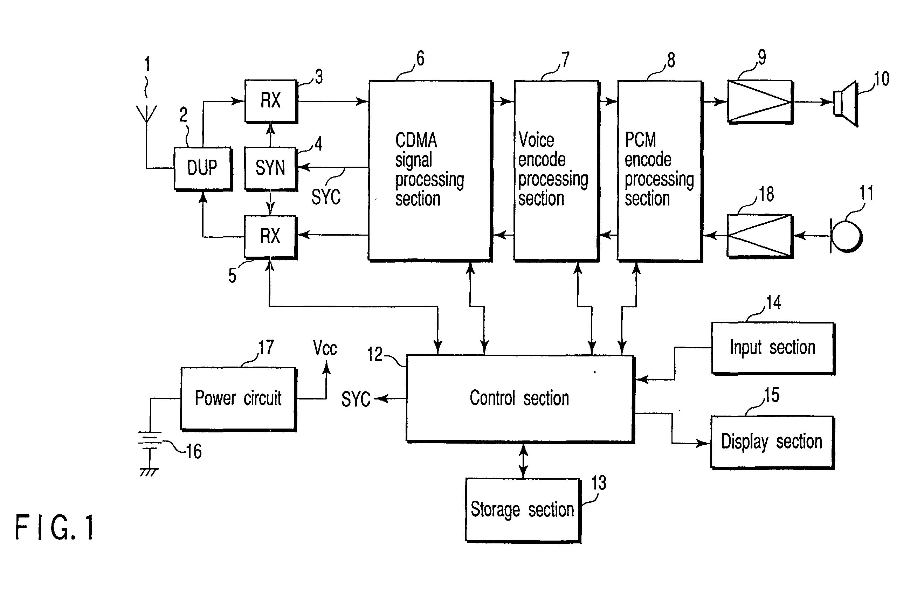

Hereinafter, preferred embodiments of the present invention will be described with reference to the accompanying drawings. FIG. 1 is a view showing a configuration of a mobile radio apparatus to which the present invention is applied. In the figure, a radio signal transmitted from a base station (not shown) is inputted to a receiver circuit (RX) 3 via an antenna shared device 2 (DUP) after received by an antenna 1. At the receiver circuit 3, the above radio frequency signal is mixed with a receiving local oscillation signal outputted from a frequency synthesizer (SYN) 4, and the mixed signals are frequency converted into an intermediate frequency signal. A frequency of the receiving local oscillation signal generated from the above frequency synthesizer 4 is indicated by a control signal SYC from a control section 12 composed of a CPU.

The above receiving intermediate frequency signal is subject to quadrature demodulation processing at a CDMA signal processing section 6, and thus, is despread by means of a spread code (PN code) assigned to a receiving channel. In this manner, the despread signal is converted into demodulation data in a predetermined format according to a data rate. Then, the thus converted demodulation data is inputted to a voice encode processing section 7. In addition, of the above receiving data, the data indicating a data rate is inputted as a receiving data rate to the control section 12.

The voice encode processing section 7 applies expansion processing according to a receiving data rate notified from the control section 12 to the demodulation data outputted from the above CDMA signal processing section 6. Then, this section performs decode processing and error correction processing using a Viterbi decoding or the like, and reproduces baseband receiving digital data.

A PCM encode processing section 8 performs different signal processing according to type (voice communication or data communication) of digital voice signal communication outputted from the control section 12. That is, during voice communication, this section PCM decodes receiving digital data outputted from the voice encode processing section 7, and outputs an analog receiving signal. This analog receiving signal is loudly outputted by means of a speaker 10 after amplified by means of a receiving amplifier 9. In addition, during data communication, this section outputs to the control section 12 the receiving digital data outputted from the voice encode processing section 7. The control section 12 stores the above receiving digital data in a storage section 13. Here, the storage section 13 is composed of a nonvolatile memory such as EEPPROM. In addition, this storage section outputs the above receiving digital data from an external interface to a hand held information terminal (PDA: Personal Digital Assistants) or a personal computer such as notebook type personal computer.

In contrast, a speaker's transmission voice during voice communication is amplified to a proper level by means of a transmitting amplifier 18 after inputted to a microphone 11. Then, PCM encode processing is applied to the amplified voice at the PCM encode processing section 8, and the encoded voice is inputted as transmission data to the voice encode processing section 7. In addition, data outputted from a personal computer (not shown) or image data inputted from a camera (not shown) is inputted to the control section 12 via the external interface, and the inputted data or image data is outputted to the voice encode processing section 7 via the PCM encode processing section 8 from the control section 12.

During voice communication, the voice encode processing section 7 detects an energy quantity of an input voice from transmission voice data outputted from the PCM encode processing section 8, and determines a data rate based on the detection result. Then, this section compresses the above transmission data into a burst signal in a format according to the above data rate, further applies error correction/encode processing to the compressed signal, and outputs it to a CDMA. signal processing section 6. In addition, during data communication, this section compresses transmission data outputted from the PCM encode processing section 8 into a burst signal in a format according to a preset data rate, further applies error correction/encode processing to the compressed signal, and outputs it to the CDMA signal processing section 6. Any data rate during voice communication and data communication is notified as a transmission data rate to the control section 12.

The CDMA signal processing section 6 applies spread processing to the burst signal compressed at the above voice encode processing section 7 by using a PN code assigned to a transmission channel. Then, this section performs quadrature modulation processing for the spread encoded transmission signal, and outputs this quadrature modulated signal to a transmitter circuit (TX) 5.

The transmitter circuit 5 combines the above quadrature modulated signal with a transmission local oscillation signal generated from a frequency synthesizer 4, and converts it into a radio frequency signal. The transmission circuit 5 amplifies only an effective portion of the above radio frequency signal based on the transmission data rate notified by the control section 12. A transmission radio frequency signal outputted from this transmitter circuit 5 is supplied to the antenna 1 via the antenna shared device 2, and is burst transmitted from this antenna 1 to a base station (not shown).

Keys such as dial key or call origination key, power key, exit key, volume control key or mode specification key are provided at an input section 14. In addition, at a display section 15, there is provided an LCD display for displaying a telephone number of a called speaker's terminal or device operation state and receiving data and the like, or an LED lamp that represents a charge operation of a battery 16. Reference numeral 17 denotes a power circuit that generates a predetermined operating power voltage Vcc based on an output of the battery 16 and supplies the voltage to each circuit section.

In the meantime, the control section 12 has a microcomputer as a main control section, for example. This control section provides a function for performing synchronization acquisition processing according to the present embodiments described later as well as a communication control function for establishing a communication link between the control section and a base station according to call origination, thereby making data communication, or a control function for recording/reproducing the voice of the called speaker by using the storage section 13.

Hereinafter, synchronization acquisition processing according to the present embodiments will be described. In the case where a mobile radio apparatus is used at a comparatively identical place, the number of base stations to be acquired by synchronization acquisition processing after power has been turned ON is identical to the number of mobile radio apparatuses at a high probability or is limited. In such a case, a database having its priority in groups or scramble codes for performing synchronization acquisition processing is generated, and some patterns with their particularly high priority are first searched, thereby making it possible to remarkably reduce a synchronization acquisition processing time in the case where the database is used at the same place as the base station. Even in the case where the database has been used at the other place, conventional synchronization acquisition processing is performed at a stage at which a search of data held in the database is completed, thereby making it possible to cope with all the patterns.

First, a group during synchronization acquisition and the related scrambling code used at this time are held. These items of data are stored as a database in the above storage section 13, and the stored items of data are rearranged in order from the frequently used data. The less frequent data may be erased from the database. In addition, even in the case where a group/scramble code used during handoff or the like has been changed, the database can be updated. The above database can be configured by a combination of groups or a combination of groups and scrambling codes.

As a result, a database table as shown in FIG. 5 and FIG. 6 is generated. Alternatively, even if a list of tables held in a receiver is changed and used without generating such database table, the same advantageous effect is achieved.

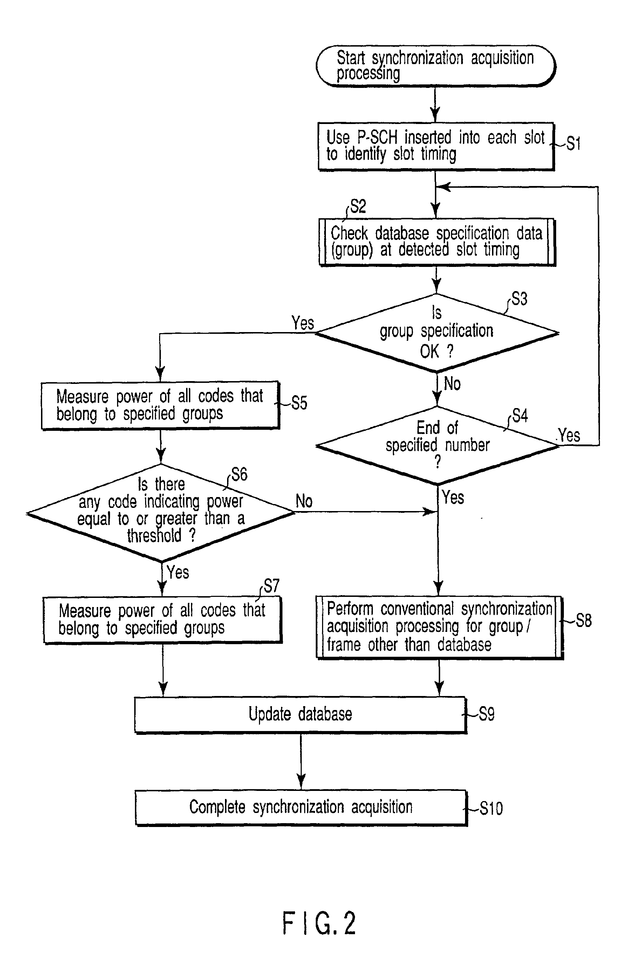

Hereinafter, synchronization acquisition processing according to a first embodiment of the present invention will be described in detail with reference to FIG. 2. In the present embodiment, table information contains only group data, and therefore, a database table is configured as shown in FIG. 5.

Processing for detecting P-SCH inserted into each slot immediately after starting synchronization acquisition processing, and identifying a slot timing is identical to that according to prior art (step S1). Next, database specification data (group) is checked at the detected slot timing (steps S2 and S3). Here, a database updated every time acquisition is performed and every time a new group is used is used, a group first prepared at the head of the database, i.e., a pattern of group number #3 in this example is used to identify a frame.

At this time, a S-SCH collation value (power value) is obtained in a pattern of a specified group number (step S5). At this time, it is judged whether or not the collation value is greater than a set threshold. If it is affirmatively judged, a frame is assumed as having successfully specified. This processing is continued until the group/frame has been successfully specified or data stored in the database has been checked.

This processing is repeated, and it is judged whether or not processing count (processing count indicating which number of database is to be searched with priority) has reached a preset condition (step S4). In the case of YES, the above processing is stopped, and synchronization acquisition processing according to the prior art is performed for a group/frame other than database (step S5).

In this case, although it is conventional processing, a group targeted for database priority processing has been already checked. Thus, it is judged that detection is unacceptable (NG). Therefore, such group may be excluded from a candidate of spread codes.

A scramble code is specified after the above group has been successfully specified. This processing is identical to that according to the prior art. Scrambling codes that belong to a plurality of groups are assigned to a specified frame timing, power is measured (step S7), and a large amount of power is selected.

Following the step S7 or step S7, processing goes to the step S9 at which a database is updated, and synchronization acquisition processing is completed (step S10).

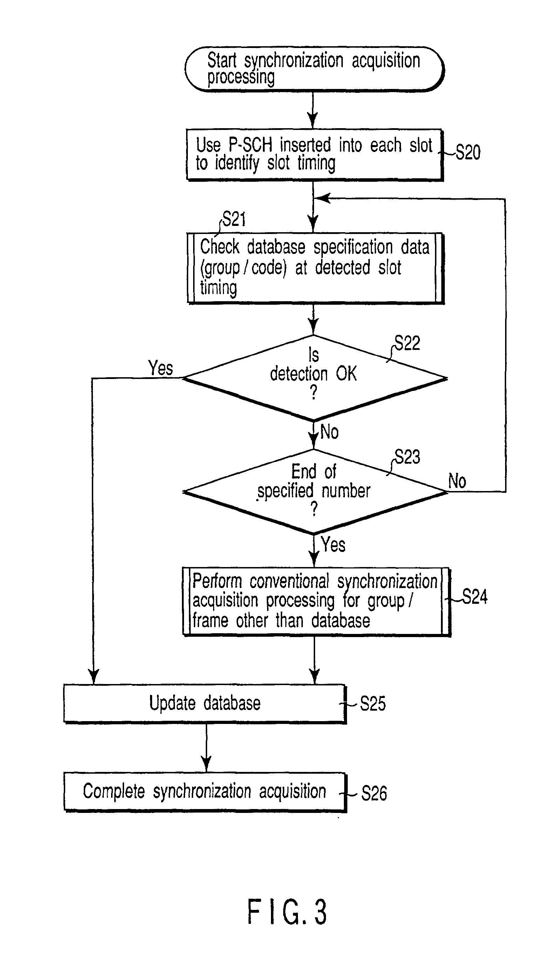

Now, synchronization acquisition processing according to a second embodiment of the present invention will be described in detail with reference to FIG. 3. In the present embodiment, a database table is configured by a combination of groups and scramble codes. In this case, the table is configured as shown in FIG. 6.

Processing for detecting P-SCH inserted into each slot immediately after starting synchronization acquisition processing, and identifying a slot timing (step S20) is identical to that according to the previously described first embodiment.

Next, database specification data (group and code) is checked at the detected slot timing (steps S21 and S22). Here, a database updated every time acquisition is performed is used, and a group/code first prepared at the head of the database, i.e., group number #3 and scramble code number #1 in this example are used to check whether or not that timing coincides with the group and code specified by the database at the detected slot timing.

Frame synchronization processing is performed by using a group pattern, a scramble code is applied to the thus detected frame, and power is measured. Although a plurality of codes are detected by comparing them with each other in a conventional method, comparison processing cannot be performed in the present embodiment because only one scramble code is targeted. Thus, when power is measured by applying a scramble code, it is judged whether or not detection is acceptable (OK) according to whether or not the power value is equal to or greater than a set threshold (step S22). In the case where the detection is OK, processing goes to the step S25 at which the database is updated, and then, syncnronization acquisition processing is completed (step S26).

In the case where the detection is not OK, a combination of groups/codes is assumed to be incorrect. Then, the next candidate of spread codes in the database is used to make a check in the similar procedures. In this example, processing is performed to judge whether or not power equal to or greater than a threshold can be taken by group number #45 or scramble code number #5.

In the case where the above processing is repeated, and processing count (processing count indicating which number of database is to be searched with priority) reaches a preset condition, the judgment result is YES at the step S23. Then, processing goes to the step S24 at which conventional synchronization acquisition processing is performed for a group/frame other than database. In this processing, a combination of groups/scramble codes targeted for database priority processing has been already checked, detection is judged to be unacceptable (NG). Thus, such combination may be excluded from a candidate of spread codes.

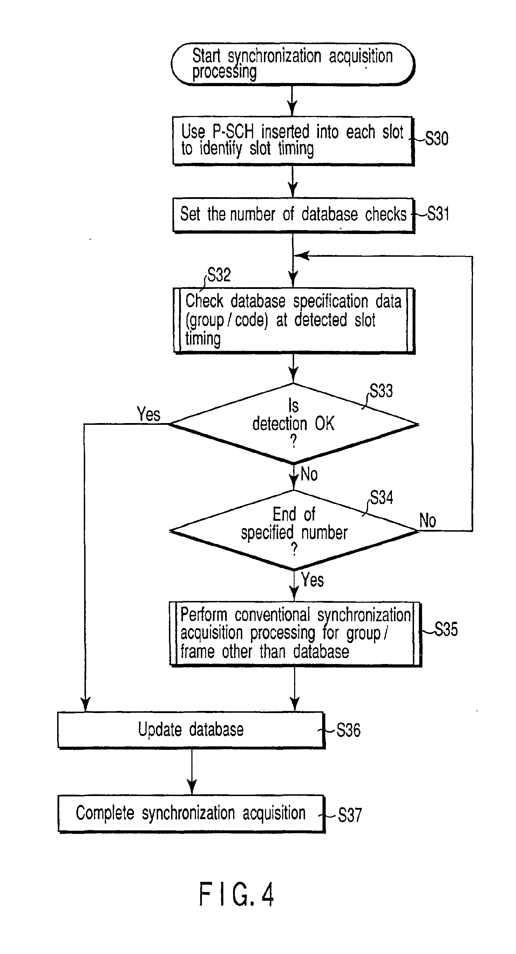

Now, synchronization acquisition processing according to a third embodiment of the present invention will be described in detail with reference to FIG. 4.

Although the contents and flow of processing according to the third embodiment are identical to those according to the second embodiment, a configuration is made to adaptively change the number of database elements for making a check. For example, as shown in FIG. 7, the use frequency of a group/code combination table is represented by a use rate (%), and only the tables indicating a rate equal to or greater than the use frequency specified in advance is targeted for search.

First, P-SCH inserted into each slot immediately after starting synchronization acquisition processing is detected, and a slot timing is identified (step S30). Next, a database table is checked prior to performing group identification processing, and the number of elements in which the use frequency exceeds the specified threshold is obtained (step S31). For example, at this time, assuming that the threshold is 10%, three elements from No. 1 to No. 3 meet a condition in FIG. 7, and the number of checks is 3. This value is defined as the set number, and the same processing as that according to the above described second embodiment is performed in accordance with the steps S32 to S37, thereby enabling more efficient synchronization acquisition processing.

As has been described above, the past used groups or groups and scramble codes are stored in order based on use frequency. In the case where synchronization acquisition is performed, one or plural groups and scramble codes with high use frequency are searched with priority. In addition, in the case where a predetermined condition is met by groups and scramble codes that have been searched with priority, it is assumed that synchronization acquisition has completed, and the subsequent processing is not performed. In the case where the predetermined condition is not met, conventional search processing is performed for the other groups and codes. In this way, groups and scramble codes with high use frequency are first searched, thereby making it possible to remarkably reduce a time and an amount of synchronization acquisition processing.

The synchronization processing according to the above described embodiments may be performed by hardware.

According to the present invention, there can be provided a mobile radio apparatus and its control device capable of reducing an amount of synchronization acquisition processing and reducing a processing time and current consumption.

## Claims

1. A mobile radio apparatus which selectively transmits one or some of candidates of a plurality of spread codes and selects one or more candidates of the transmitted spread codes among a databse of spread code and performs synchronization with the transmitted spread codes, said mobile radio apparatus **characterized by** comprising:
receiver configured to rearrange a group data of spread code based on frequency of the spread code and generate a database of spread codes based on the rearranged group data.

2. A mobile radio apparatus as claimed in claim 1, **characterized in that** the receiver updates the database every time a candidate of spread codes is specified.

3. A mobile radio apparatus as claimed in claim 1, **characterized in that** searching is performed in order based on higher priority.

4. A mobile radio apparatus as claimed in claim 3, **characterized in that**, in the case where a candidate of spread codes meeting a preset condition has been detected, the receiver judges that the candidate of spread codes has been successfully specified, and stops the subsequent processing.

5. A mobile radio apparatus as claimed in claim 1, **characterized in that** the receiver adaptively changes the number of the database elements to be searched.

6. A mobile radio apparatus as claimed in claim 5, **characterized in that** the receiver represents a use frequency of the candidate of each spread code in the database by a use rate, and only the use rate indicating a rate equal to or greater than a use frequency specified in advance is targeted for search.

7. A control device in a mobile radio apparatus which selectively transmits one or some of candidates of a plurality of spread codes and selects one or more candidates of the transmitted spread codes among a database of spread code and performs synchronization with the transmitted spread codes, the control device **characterized by** comprising;
control section (12) configured to rearrange a group data of spread code based on frequency of the spread code and generate a database of spread codes based on the rearranged group data.

8. A control device in a mobile radio apparatus as claimed in claim 7, **characterized in that** the control section (12) updates the database every time a candidate of a spread code is specified.

9. A control device in a mobile radio apparatus as claimed in claim 7, **characterized in that** searching is performed in order based on higher priority.

10. A control device in a mobile radio apparatus as claimed in claim 7, **characterized in that**, in the case where a candidate of a spread code meeting a preset condition has been detected, it is assumed that the candidate of the spread code has been successfully specified, and the subsequent processing is stopped.

11. A control device in a mobile radio apparatus as claimed in claim 7, **characterized in that** the number of the databases to be searched is adaptively changed.

12. A control device in a mobile radio apparatus as claimed in claim 11, **characterized in that** the use frequency of each candidate in the database is represented by a use rate, and only the use rate indicating a rate equal to or greater than a use frequency specified in advance is targeted for search.
